# EUROPÄISCHE PATENTANMELDUNG

(11) **EP 2 458 465 A2**
(43) Veröffentlichungstag der Anmeldung: **30.05.2012**
(21) Anmeldenummer: 11009408.3
(22) Anmeldetag: 28.11.2011
(51) Int. Cl.: G05B 19/418

(54) **Verfahren zur Bewertung eines Montageplatzes, System zur Durchführung sowie Montageplatz**

(30) Priorität: 26.11.2010 DE 102010052658
(71) Anmelder: Friedrich-Alexander-Universität Erlangen-Nürnberg, 91054 Erlangen (DE)
(72) Erfinder: Tremel, Jan, Dipl.-Ing., 96199 Zapfendorf (DE); Gu, Kailun, 86167 Augsburg (DE)
(74) Vertreter: FDST Patentanwälte

(57) **Zusammenfassung**

Die Erfindung betrifft ein Verfahren zur Bewertung eines Montageplatzes (3), wobei ein durch den Montageplatz (3) vorgegebener Montageprozess zunächst In einzelne Prozesssegmente unterteilt wird, die jeweils durch wenigstens ein charakteristisches Handlungsereignis gekennzeichnet sind, wobei während einer Durchführung oder einer Simulation des Montageprozesses zu den Prozesssegmenten automatisiert jeweils ein Zeitpunkt während des Auftretens des Handlungsereignisses sensorisch erfasst wird, wobei die zeitlichen Abstände zwischen den erfassten Zeitpunkten abfolgender Prozesssegmente ermittelt und als Datensatz abgespeichert werden, und wobei der Datensatz für die Bewertung der Effektivität des Montageplatzes (3) herangezogen wird. Die Erfindung betrifft weiter ein entsprechendes System zur Durchführung sowie einen mit dem System ausgestatteten Montageplatz (3).

## Beschreibung

Die Erfindung betrifft ein Verfahren zur Bewertung eines Montageplatzes sowle ein System zur Durchführung dieses Verfahrens. Die Erfindung betrifft weiter einen Montageplatz, der mit einem solchen System zur Bewertung ausgestattet ist.

Unter einem Montageplatz oder einer Montageplatzgruppe wird vorliegend eine konkrete Anordnung zu einer Insbesondere manuellen Montage eines Erzeugnisses verstanden, die beispielsweise einen Sitz- oder Stehplatz, dazu relativ erreichbare Behälter für Einzelteile und/oder Montagehilfsmittel, eine Arbeitsfläche sowie entsprechend positionierte Montagewerkzeuge umfasst. Aus den Einzelteilen wird nacheinander mittels der Montagehiffsmittel und den Montagewerkzeugen ein fertiges Produkt, wie beispielsweise ein Handstaubsauger etc., zusammengesetzt bzw. montiert. Ein das Produkt fügender Mensch wird in diesem Zusammenhang üblicherweise als Werker bezeichnet.

Im Zuge der Planung eines neuen Montageplatzes oder einer neuen Montageplatzgruppe werden derzeit zu dessen bzw. deren Optimierung, insbesondere hinsichtlich Geschwindigkeit und Abfolge der einzelnen Prozessschritte, im Wesentlichen zwei Strategien, in manchen Fällen auch parallel, verfolgt.

Bei der klassischen Herangehensweise ermittelt ein meist aus Ingenieuren bestehendes Projektteam eine geeignete Umsetzung basierend auf konkreten Vorgaben wie zum Beispiel einer bestimmten Produktionsrate oder einem für das Produkt festgelegten Kostenlimit. Genutzt werden dabei verschiedene Hilfsmittel, Analyseverfahren und Simulationsprogramme. Beispielsweise kann für den Montageprozess zunächst ein Montagevorranggraph erstellt werden, der die Abhängigkeit der einzelnen Prozessschritte unterelnander darstellt. Für die sich daran anschlleßende Ablauf- und Layoutplanung des Montageplatzes stehen Konstruktions- und Simulationsprogramme zu Verfügung. In einer möglichen Endphase der Planung kann dann beisplelswelse mittels der sogenannten MTM-Methode (engl.: methods-time-measurement) oder gemäß der REFA-Methodenlehre (REFA-Verband für Arbeitsgestaltung) eine Analyse und in Folge dessen eine Verbesserung im Layout des Montageplatzes zur Durchführung der Arbeitsabläufe erfolgen.

Daneben hat sich mittlerweile eine weitere Vorgehensweise etabliert, die den Werker als späteren Nutzer des Montageplatzes stärker in den Mittelpunkt der Betrachtung rückt. Hier wird in der Regel eine bestehende Arbeitsstruktur, typischerwelse ein Werkerverbund mit entsprechenden Vorkenntnissen, vorausgesetzt. Basierend darauf sollen durch Beobachtung realer oder simulierter Arbeitsabläufe, durch einfache Tests und Rücksprachen mit dem Werkerverbund bis dahin ungenutzte Verbesserungspotentiale, insbesondere In der unmittelbaren Fertigungsumgebung, aufgedeckt werden. Dementsprechend eignet sich dieser Ansatz auch zur nachträglichen Überprüfung bereits im Einsatz befindlicher Montageplätze bzw. Montageplatzgruppen.

Ein häufig genutztes Hilfsmittel zur Umsetzung dieses Konzepts in der Planungsphase Ist das sogenannte Cardboard Engineering, also die Herstellung von Montageplatzmodellen Insbesondere aus Pappkarton. Mit diesen Nachblldungen Ist es möglich, die Produktionsprozesse vorab bereits realitätsnah nachzustellen. Mit anderen Worten spielen Werker an den Montageplatzmodellen die tatsächliche Fertigung konkret nach. Auf diese Weise können eventuelle Schwächen einer Umsetzung bereits im Vorfeld aufgedeckt werden, bevor die im Vergleich zu den Modellnachbildungen sehr kostenintensiven Montageplätze bzw. Montageplatzgruppen tatsächlich realisiert werden. Als nachteilig gegenüber der klassischen Vorgehensweise erweisen sich dabei allerdings die eingeschränkten Bewertungsund Dokumentationsmöglichkeiten. Zum Beispiel erfolgt die Überwachung eines realen oder simulierten Arbeitsablaufes in vielen Fällen lediglich durch einen geschulten Beobachter, so dass ein Vergleich zwischen mehreren Varianten eines Montageplatzes bzw. einer Montageplatzgruppe in erster Linie nur unter subjektiven Gesichtspunkten vorgenommen werden kann.

Ein mögliches Verfahren zur automatisierten und damit auch objektiven Erfassung entsprechender Daten Ist In der DE 100 54 095 offenbart. Darin wird vorgeschlagen, einen Montageplatz bzw, eine Montageplatzgruppe mittels eines Datenverarbeitungssystems in einem vorgegebenen Koordinatensystem darzustellen. Hierzu werden am Produktionsprozess beteiligte Werkzeuge oder Körperteile mit Elementen einer Positionsmesseinrichtung ausgestattet. Der Produktionsprozess wird dann durch Erfassung der Positionsänderungen aller Elemente während der Simulation oder der Durchführung desselbigen dokumentiert Aus den erfassten Positionsänderungen wird die Bewegung der Werkzeuge und/oder der Körperteile relativ zu den Komponenten des Montageplatzes im Datenverarbeitungssystem berechnet und aufgezeichnet Die hierdurch gewonnenen Daten können allerdings nur durch spezielle Fachkräfte und mit unverhältnismäßig hohem Zeitaufwand ausgewertet werden. Eine Auswertung durch Fachpersonal ist darüber hinaus nachteiligerweise auch stets subjektiv gefärbt. Zudem werden unverhältnismäßig viele Daten erfasst und eine hohe Rechnerkapazität benötigt.

Ausgehend hiervon liegt der Erfindung die Aufgabe zugrunde, ein einfaches objektives Verfahren zur Unterstützung bei der Planung eines Montageplatzes zu entwickeln. Diese Aufgabe wird erfindungsgemäß durch die Merkmale des Anspruchs 1 gelöst. Die rückgezogenen Ansprüche beinhalten teilweise vorteilhafte und teilweise für sich selbst erfinderische Weiterbildungen dieser Erfindung.

Das erfindungsgemäße Verfahren dient zur einfachen Gewinnung eines Datensatzes verhältnismäßig geringer Größe, der Grundlage für die objektive Bewertung der Effektivität einer Ausführung eines Montageplatzes oder einer Montageplatzgruppe ist. Dazu wird ein durch den Montageplatz vorgegebener Montageprozess zunächst in einzelne Prozesssegmente unterteilt, die jeweils durch wenigstens ein charakteristisches Handlungsereignis gekennzeichnet sind. Während einer Durchführung oder einer Simulation des Montageprozesses zu den Prozesssegmenten wird dann automatisiert jeweils ein Zeitpunkt während des Auftretens des Handlungsereignisses sensorisch erfasst. Aus den erfassten Zeitpunkten werden die zeitlichen Abstände zueinander ermittelt und als Datensatz abgespeichert. Der Datensatz wird schließlich für die Bewertung der Effektivität des Montageplatzes herangezogen.

Die Erfindung eignet sich dabei nicht nur zur Beurtellung der Effektivität eines bestehenden oder zu planenden Montage- oder Arbeitsplatzes, sondern auch zur Unterstützung der Weiterentwicklung bestehender Montageplätze oder Montagegruppen und zugehöriger Logistikprozesse wie beispielsweise der Teilebereitstellung. Beispielsweise kann bei der Planung einer neuen Produktionshalle die Erfindung helfen, neue Arbeits- oder Montageplätze zu den bestehenden zu ergänzen oder eine Änderung des Arbeitsablaufes insgesamt vorzuschlagen, um Vorteile in der Ausführungszeit zu erhalten.

Der Erfindung liegt dabei die Überlegung zugrunde, die Überwachung eines Montageprozesses zur Ermittlung seiner Effektivität auf die Erfassung von konkreten Zeitpunkten zu beschränken, die eine Aussage über die Dauer eines konkreten Prozesssegmentes oder Prozessabschnittes erlauben. Dies gelingt dadurch, dass lediglich das Auftreten eines konkreten Handlungsereignisses und nicht der Ablauf als solcher sensorisch erfasst wird. Damit wird der Abstand zwischen den erfassten Zeitpunkten des Auftretens der konkreten Handlungsereignisse nachfolgender Prozesssegmente ein Maß für deren jeweilige spezifische Dauer. Durch eine Betrachtung der verschiedenen Dauern der Prozesssegmente eines konkret durchgeführten Montageprozesses wird beispielsweise rasch der längste Prozessabschnitt ersichtlich, der dann für eine Störung des Montageablaufes maßgeblich verantwortlich Ist. Auch wird ersichtlich, wenn beispielsweise ein vergleichsweise rasch abzulaufender Prozessabschnitt unverhältnismäßig lange dauert. Dies wäre ein Indiz dafür, dass beispielsweise eine ungeschickte Anordnung der Einzelteilbehälter vorhanden ist, oder dass der vorausgehende Prozessabschnitt in der Abfolge nicht Ideal zugeordnet Ist.

Aufgrund des verhältnismäßig geringen Datenumfangs und der sehr zweckmäßigen Auswahl der zu erfassenden Informationen, gestaltet sich die Auswertung der Daten einfach und wenig zeitintensiv. Vorteilhaft Ist es dabei natürlich, die Daten in einem Speicher zu hinterlegen. So kann die Auswertung bei Bedarf zeitversetzt zur Datenerfassung vorgenommen werden.

In einer geeigneten Weiterbildung des Verfahrens ist es vorgesehen, die Simulation oder Durchführung des Montageprozesses mehrfach zu wiederholen. Aus den dann mehrfach ermittelten Zeitabständen lässt sich auf eine durchschnittliche Dauer der einzelnen Prozessabschnitte oder Prozesssegmente schließen. Auf diese Weise können einmalige störende Gegebenheiten wie beispielsweise eine kurze Ablenkung des Werkers durch Nießen, durch ein Gespräch, durch eine Pause etc. eliminiert werden. Wird das Verfahren mehrfach mit verschiedenen Werkem wiederholt, können auch Unterschiede in den Arbeitsabläufen verschiedener Werker berücksichtigt oder ausgemittelt werden.

Welter bevorzugt Ist es angedacht, optional mehrere ermittelte Datensätze bzw. Datensatzpakete miteinander und/oder insbesondere mit einem hinterlegten Referenzdatensatz bzw. einem Referenzdatensatzpaket zu vergleichen. So können beispielweise verschiedene Ausführungen eines Montageplatzes bzw. einer Montageplatzgruppe einander gegenübergestellt werden, oder es kann überprüft werden, ob eine Ausführung bestimmte Vorgaben erfüllt. Auch können, wie erwähnt, Abweichungen der realen Dauer eines Prozessabschnitts gegenüber der erwarteten Dauer leicht erkannt und so Rückschlüsse beispielsweise auf eine nicht Ideale Einbindung dieses Abschnitts In den Gesamtablauf gewonnen werden.

Bevorzugt werden der ermittelte Datensatz und der Referenzdatensatz in Form einer Anzahl von Tupeln hinterlegt, wobei jedes Tupel einem Prozesssegment eine Zeitdauer zuordnet, und wobei jeweils die Zeitdauern der Tupel derselben Prozesssegmente aus dem ermittelten Datensatz und aus dem Referenzdatensatz miteinander verglichen werden. Durch einen solchen Vergleich ist sofort ersichtlich, bei welchen Montageschritten oder Prozesssegmenten gegenüber der von der Arbeitsvorbereitung anvisierten Ziel- oder Sollzeitdauern Abweichungen bestehen. Der Vergleich kann einfach insbesondere dadurch visualisiert werden, dass die Zeltdauern der einzelnen Prozesssegmente durch farbig abgesetzte Balken dargestellt werden, wobei die Balken des ermittelten Datensatzes und des Referenzdatensatzes einander gegenübergestellt werden.

Weiter bevorzugt ordnen die Tupel einem Prozesssegment zusätzlich einen Sensor.zu, wobei die zeitlichen Abstände zwischen den erfassten Zeitpunkten anhand dieser Zuordnung automatisiert den jeweiligen Prozesssegmenten im ermittelten Datensatz zugewiesen werden. Hierdurch kann durch ein einfaches Einlesen des Referenzdatensatzes das Erfassungssystem automatisch konfiguriert werden. Die Zuordnung des Sensors geschieht beisplelsweise durch Zuweisung einer spezifischen Adresse innerhalb des verwendeten, insbesondere drahtlosen, Kommunikationssystems. Insbesondere ist hierzu ein automatisiertes Einlesen des Referenzdatensatzes vorgesehen.

Das Verfahren bietet weiter den großen Vorteil des Einsatzes vergleichsweise einfacher und kostengünstiger Sensoren, da lediglich das Auftreten eines auslösenden Ereignisses überwacht werden muss. Mit anderen Worten werden nur solche Sensoren benötigt, die eine einfache Schaltfunktion aufweisen, also Auslöseelemente, Insbesondere Schalter. Derartige Auslöseelemente beruhen auf optischen, magnetischen, mechanischen, akustischen oder elektrischen Funktionsprinzipien. Als geeignete Auslöseelemente werden bevorzugt mechanische Schalter, kapazitive Auslöseelemente, Näherungsschalter, optische Auslöseelemente, Lichtschranken- oder Lichtschnittsensoren, Bewegungssensoren oder Körperschallsensoren eingesetzt. Mittels eines Lichtschranken- oder Lichtschnittsensors kann in einfacher Weise das Passieren eines Körperteils eines Werkers während eines Teilmontageschrittes überwacht werden. Ebenso einfach kann ein entsprechend positionierter Bewegungssensor beispielsweise das Ergreifen eines Werkstücks, eines Einzelteils oder eines Werkzeugs anhand der im überwachten Raum erfassten Bewegung melden. Körperschallsensoren wiederum können beispielsweise an oder in den Behältern von Einzelteilen positioniert werden, so dass diese belm Entnehmen oder Ablegen eines Werkstücks ansprechen. Solche Körperschallsensoren können auch an Werkzeugen angebracht werden und beispielsweise das Ein- oder Ausschalten des Werkzeugs oder auch sein Ergreifen oder Ablegen meiden.

In einer zweckmäßigen Variante des erfindungsgemäßen Verfahrens wird als charakteristisches Handlungsereignis das Ergreifen eines im Rahmen des Montageprozesses zu montierenden Bauteils oder zu benutzenden Werkzeugs durch einen Werker gewählt. Eine anhand des Ergreifens spezifischer Bauteile, Einzelteile oder Werkzeuge und/oder eine anhand der Benutzung des Werkzeugs vorgenommene Segmentierung des Montageprozesses weist einen hohen Grad an Übereinstimmung mit einer Unterteilung basierend auf einem entsprechenden Montagevorranggraphen auf, so dass hierdurch eine gute Basis für Vergleiche gegeben ist. Als Sensoren zur Erfassung der Ergreifung oder Benutzung eines Werkzeugs kann beispielsweise ein Schalter oder ein Näherungssensor eingesetzt sein. Ein solcher Sensor charakterisiert dann beispielsweise bei einer Hand-hebelpresse den Auslösezeitpunkt oder die richtige Hebelstellung. Auch kann der Ein/Aus-Schalter eines elektrischen Werkzeugs als geeigneter Sensor implementiert sein.

Von Vorteil ist es zudem, die Datenerfassung anonymisiert, also ohne direkten Bezug zum Werker, vorzunehmen. Auf diese Weise kann der Missbrauch der Daten zu Lasten der Arbeitnehmer wirksam verhindert und die Einhaltung von Datenschutzbestimmungen oder arbeitsrechtlichen Bestimmungen sichergestellt werden.

Darüber hinaus ist es zweckdienlich, wenn die Sensoren zur Bildung eines Datensatzes untereinander und/oder mit einer zentralen Auswerteeinheit Daten drahtlos, Insbesondere optisch oder per Funk, austauschen. Zum einen kann die Analyse und die Auswertung der Daten so zentral erfolgen und zum anderen entfällt durch die Drahtlosübertragung eine signaltechnische Verkabelung der Einheiten, die sich besonders mit zunehmender Anzahl von Einheiten und mit zunehmenden räumlichen Abständen zwischen den Einheiten als unvorteilhaft erweist.

Vorteilhafterweise werden die eingesetzten Sensoren drahtlos anwenderspezifisch programmiert. Dadurch wird es ermöglicht, die Datenerfassung einzelner Sensoren an den Jewelligen Anwendungsfall spezifisch anzupassen. Diese Anpassung kann insbesondere die Detektionsgenauigkeit oder die Auslösegeschwindigkeit betreffen.

Eine zweite Aufgabe der Erfindung ist die Angabe eines einfachen und kostengünstigen Systems zur Durchführung einer Analyse eines Montageplatzes oder einer Montageplatzgruppe. Diese Aufgabe wird erfindungsgemäß durch die Merkmale des Anspruchs 12 gelöst.

Demnach ist ein System zur Durchführung des vorbeschriebenen Verfahrens vorgesehen, welches eine Anzahl von Sensoren, die zur automatisierten Erfassung eines Zeitpunktes eines Handlungsereignisses ausgebildet sind, sowie eine mit den Sensoren signaltechnisch verbundene Auswerteeinheit mit einem Speicher umfasst, welche ausgebildet Ist zur Auswertung und Speicherung der erfassten Zeitabstände.

Bevorzugt wird in diesem Zusammenhang eine Ausführung, bei der die Kontrolleinheiten und/oder die Auswerteeinheit jeweils mit einem Energiespeicher zur Eigenversorgung ausgestattet sind. Damit entfällt die Notwendigkeit einer externen Energiequelle sowie einer diesbezüglichen Vernetzung, was zur Steigerung der Flexibilität des Systems beiträgt. Zur Energieversorgung der Sensoren Ist zweckmäßigerweise ein zentraler Anschluss für elektrische Energie vorgesehen. Dieser Anschluss kann mit einem Akkumulator oder mit dem lokalen Stromnetz verbunden werden. Damit wird das System einschließlich seiner Sensoren insgesamt mobil und ermöglicht eine rasche Einrichtung oder Umrüstung. Als vorteilhaft wird es zudem angesehen, wenn als Auswerteeinheit mit Speicher ein stationärer oder mobiler Computer wie z.B. ein Desktop-PC oder Laptop zum Einsatz kommt. Da potentielle Kunden in der Regel bereits über einen solchen Computer verfügen, kann hierdurch eine signifikante Reduzierung der Anschaffungskosten für ein erfindungsgemäßes System erreicht werden. Zur Systemintegration wären dann lediglich ein Adapter als signaltechnische Schnittstelle sowie ein für das vorbeschriebene Verfahren entwickeltes Programm notwendig. Dieses kann im Rahmen einer Weiterentwicklung unter anderem an verschiedene Betriebssysteme angepasst werden. Selbstverständlich kann als Auswerteeinheit aber auch ein vorkonfiguriertes Mikrocontroller-Modul vorgesehen sein.

Desweiteren sind unterstützende Programmoptionen möglich und angedacht, so dass beispielweise Datensätze bzw. Datensatzpakete oder andere Informationen vom Nutzer in das Programm eingespeist werden können. Bevorzugt wird hierbei eine (re)konfigurierbare Software eingesetzt, die eine Variantenbildung erlaubt und somit den Einsatz des Systems in verschiedensten Montageumgebungen erlaubt. Auch eine Interaktion mit anderen Programmen, wie sie zum Beispiel aus der klassischen Montageplanung bekannt sind, kann Bestandteil des Programms sein.

In einer bevorzugten Ausgestaltung ist die Auswerteeinheit ausgebildet, einen Referenzdatensatz mit Tupeln insbesondere automatisiert einzulesen, wobei die Tupel jeweils einem Prozesssegment eine Zeitdauer und einen Sensor zuordnen, und die zeitlichen Abstände zwischen den erfassten Zeitpunkten anhand dieser Zuordnung automatisiert den jeweiligen Prozesssegmenten Im ermittelten Datensatz zuzuweisen. Das System ist dadurch in der Lage, durch Einlesen eines neuen Referenzdatensatzes automatisiert eine Konfigurationsänderung auf einen neuen Anwendungsfall vorzunehmen.

Besonders vorteilhaft umfasst das System weiter ein Sensorsystem mit einer Anzahl von drahtlos kommunlzlerenden Schnittstellenmodulen, denen jeweils wenigstens ein Sensor drahtgebunden angeschlossen ist, wobei die Schnittstellenmodule Mittel zu einer programmierbaren Anpassung der Datenerfassung und Datenübermittlung aufweisen.

Ein derartiges Sensorsystem ermöglicht die Einbindung beliebiger auf dem Markt befindlicher Auslöseelemente als Sensoren. Durch entsprechende Programmierung des Schnittstellenmoduls ist eine Aufnahme und Auswertung von verschiedensten Auslöseelementen sowohl analog als auch digital möglich. Dazu ist auf dem Schnittstellenmodul beispielsweise ein Mikrocontroller angeordnet, der analoge und/oder digitale Werte aufnehmen und ausgeben kann. Das Schnittstellenmodul weist neben einem Sendemodul zur Ausgabe der erhaltenen und gegebenenfalls weiterverarbeiteten Daten des Sensors weiter insbesondere ein Empfangsmodul auf, über welches der Mikrocontroller oder eine anderes Bauteil von einer Zentraleinheit entsprechend programmiert werden kann.

Bei der Ausgestaltung eines Sensorsystems mit Schnittstellenmodulen kann es wiederum vorteilhaft sein, dass die Schnittstellenmodule zur Energieversorgung der Schaltungseinheit sowie gegebenenfalls des angeschlossenen Sensors ein Batterie- oder Akkumulatorenpaket umfassen. Der Einsatz von Niedrigenergie-elementen erlaubt heutzutage eine Mindestlaufzeit von etwa einem Jahr im Dauerbetrieb, wobei sich diese Zeit verkürzt, wenn zusätzlich die Sensoren über das Schnittstellenmodul mit Energie versorgt werden müssen.

Desweiteren kann das Schnittstellenmodul zur Aufnahme von Erweiterungsplatinen ausgebildet sein, die eine Anpassung an den jeweils eingesetzten Sensor ermöglichen. Über einen Programmieradapter, der bevorzugt zugleich die Empfängereinheit der Auswerteeinheit darstellt, erfolgt die Programmierungen der Schnittstellenmodule. Dabei braucht die Programmierung nicht notwendigerweise drahtlos zu geschehen. Beispielsweise kann das Schnittstellenmodul auch mit dem Programmieradapter drahtgebunden zusammengesteckt werden, um die Programmierung vorzunehmen.

Weiter vorteilhafte Ausgestaltungen sind aus den auf ein System gerichteten Unteransprüchen entnehmbar. Dabei lassen sich sinngemäß die für ein Verfahren genannten Vorteile auf das System übertragen.

Das angegebene System kann vorteilhaft auch zur Determinierung der Taktzeit von automatisierten Vorgängen, wie z.B. eines robotergestützten Prozesssegments, eingesetzt werden. Ein solcher Vorgang ist beispielsweise der robotergestützte Auftrag einer Klebstoffraupe auf ein Bauteil. Zu einem solchen Einsatz können die Sensoren unmittelbar an einen Roboterarm oder einen Effektor angebracht werden.

Auch kann das System eingesetzt werden, um an einem neu konzipierten und aufgebauten Montage- oder Arbeitsplatz die sogenannte Normleistung zu evaluleren. Die Normleistung wird insbesondere zur Berechnung eines Arbeitslohnes herangezogen und unterliegt vorgegebenen Richtlinien. Da jeder Werker nach einer Einarbeitungsdauer den Montage- oder Arbeitsvorgang deutlich schneller als zum Start des neuen Prozessablaufs durchführen kann, kann mit dem vorbeschriebenen System die Eingangsleistung zu Beginn gemessen werden, und dann mit einem Abschlag der benötigten Zeit die später erreichbare Normleistung ermittelt werden.

Insbesondere wird das vorbeschriebene System und Verfahren auch zu einer Qualitätsbeurteilung eingesetzt. Dazu werden beispielsweise die für einen Produktionsschritt notwendigen Arbeitsschritte erfasst und dokumentiert, wie z.B. das Betätigen des Hebels einer Handhebelpresse. Auch wird hierzu beispielsweise die Anzahl der Montageschritte bzw. der Prozesssegmente zur Produktdokumentation mit Uhrzeit und jeweiliger Dauer gespeichert, so dass im Serienfehlerfail eine lückenlose Rückverfolgung garantiert ist.

Anhand eines Ausführungsbeispiels wird die Erfindung nachfolgend weiter beschrieben. Es zeigt:

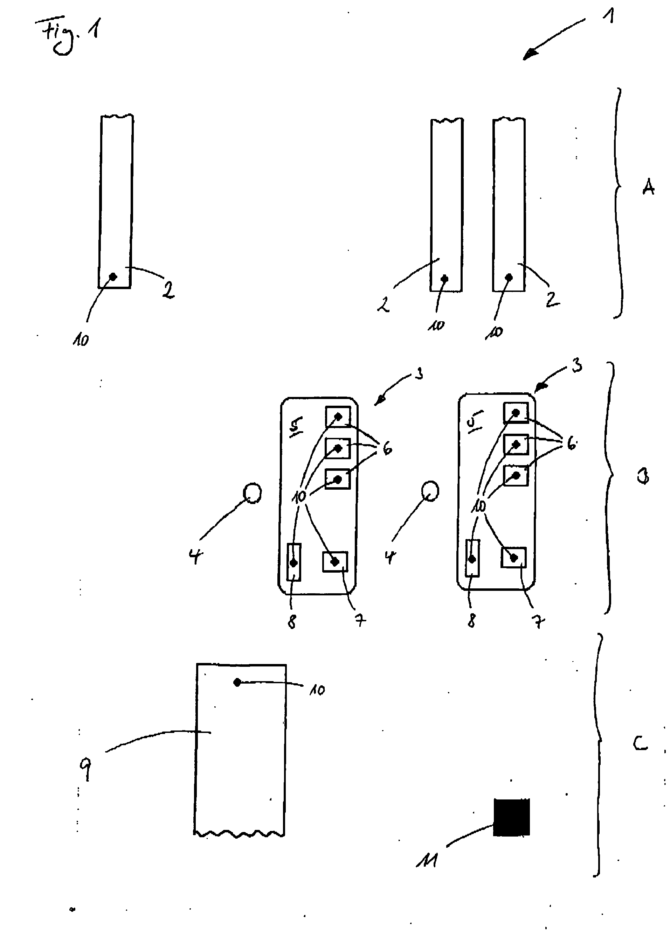

- Fig. 1: in einer schematischen Darstellung eine Montageplatzgruppe mit einem installierten System zur Durchführung eines Überwachungsverfahrens.

Die schematische Darstellung in Fig. 1 zeigt exemplarisch eine Montageplatzgruppe 1. Dabei spielt es keine Rolle, ob es sich um einen Modellaufbau aus Kartonage zum Zwecke einer Simulation oder um eine finale Realisierung, welche bereits zur Herstellung von Gütern genutzt wird und nachträglich überprüft werden soll, handelt. Der Montageplatz 1 ist Bestandteil einer größeren Fertigungsanlage oder Produktionsstraße und kann, entsprechend der darin ausgeübten Tätigkeitstypen und deren Bedeutung Im Montageprozess, in drei Bereiche A, B, C unterteilt werden.

Es sei an dieser Stelle explizit darauf hingewiesen, dass in dem hier dargelegten Ausführungsbeispiel genau genommen schon an diesem Punkt eine Segmentierung eines Montageprozesses, nämlich des vollständigen Fertigungsprozesses eines Produkts, stattgefunden hat. Das vorliegend beschriebene Verfahren, bezogen auf ein konkretes Produkt, kann selbstverständlich sowohl auf einen vollständigen Montageprozess als auch separat auf die dazugehörigen Teilmontageprozesse angewendet werden.

Den ersten Tätigkeitsbereich A bilden die zuführenden Enden 2 von drei Transportbändern. Hier erfolgt die Entgegennahme von Annahme-Bauteilen, die entweder in einem vorgelagerten Produktionsprozess in der Fertigungsaniage bzw. Produktionsstraße hergestellt wurden oder als Ware von einem Zulieferer vorrätig sind. Der zweite Tätigkeitsbereich B ist Im Ausführungsbeispiel aus zwei einzelnen Montageplätzen 3 aufgebaut. Jeder Montageplatz 3 Ist für genau einen Werker 4 konzipiert. Im Wesentlichen handelt es sich dabei jeweils um einen Tisch 5, auf welchem drei Vorratsbehälter 6 für die drei Annahme-Bauteile, ein Sammelbehälter 7 für ein Abgabe-Bauteil sowie ein Werkzeug 8 positioniert sind. In besagtem Tätigkeitsbereich B erfolgt die Weiterverarbeitung der Annahme-Bauteile zu Abgabe-Bautellen, Das wegführende Ende 9 eines Transportbandes schließlich bildet den dritten Tätigkeitsbereich C, In dem die Ab- oder Weitergabe von Abgabe-Bauteilen vorgesehen ist.

Der Montageprozess, der mit Hilfe dieser Montageplatzgruppe 1 zweifach parallel umgesetzt werden soll, lässt sich wie folgt umschreiben. Ein Werker begibt sich in den ersten Tätigkeitsbereich A und befüllt dort die Vorratsbehälter 6 mit den über die Transportbänder zugeführten Annahme-Bauteilen. Jene Vorratsbehälter 6 werden anschließend auf dem Tisch 5 des Montageplatzes 3 positioniert. Am Montageplatz 3 werden die Annahme-Bauteile dann unter Zuhilfenahme des Werkzeuges 8 zu Abgabe-Bauteilen weiterverarbeitet und als solche im Sammelbehälter 7 zwischengelagert. Ist der Sammelbehälter 7 gefüllt, so wird dieser in den dritten Tätigkeitsbereich C getragen und dort auf dem Transportband für eine Weiterbeförderung entleert. Auch wenn die Annahme sowie die Abgabe der Bauteile streng genommen nicht zu einem Montageprozess im eigentlichen Sinn des Begriffs gehören, müssen sie bei einer Montageprozessplanung oder Montageprozessüberprüfung mit berücksichtigt werden, da diese ein wesentlicher Bestandteil des gesamten Montage- oder Fertigungsprozesses eines Produktes sind.

Die hier beschriebene Montageplatzgruppe 1 soll nun hinsichtlich ihrer Effektivität bewertet werden. Dazu wird zunächst eine Segmentierung des entsprechenden Montageprozesses, der seinerseits bereits ein Teilmontageprozess ist, vorgenommen. Für jedes Segment wird dazu ein geeignetes charakteristisches Handlungsereignis bestimmt. Eine diesbezüglich angepasste Anordnung von Sensoren 10 schließlich erlaubt die Überwachung der Montageplatzgruppe 1 derart, dass die zeitlichen Abstände zwischen dem Auftreten der charakteristischen Handlungsereignisse sowie deren zeitliche Abfolge registriert werden, und dass diese information an eine signaltechnisch damit verbundene zentrale Auswerteeinheit 11 mit Speicher weitergeleitet wird.

Als Sensoren 10 im Bereich der Montageplätze 3 kommen hier einfache Körperschallsensoren zum Einsatz, die durch Vibrationen aus der näheren Umgebung aktiviert werden und in Folge dessen einen Triggerimpuls aussenden. Alternativ können aber auch Lichtschrankensensoren, kapazitive Näherungssensoren, Berührungssensoren, Bewegungssensoren und so weiter eingesetzt werden. An den Enden 2, 9 der Transportbänder sind als Sensoren 10 Lichtschrankensensoren angeordnet. Es handelt sich insofern um einfache Sensoren, da keine Messdaten sondern lediglich Triggerimpulse übermittelt werden, die den Zeitpunkt des Auftretens des jeweiligen Handlungsereignisses anzeigen. Die Triggerimpulse werden dann von einem vorzugsweise mobilen Computer, der im Ausführungsbeispiel als Auswerteeinheit 11 fungiert, verarbeitet und graphisch auf einem Zeitstrahl dargestellt.

Die Anordnung der Sensoren 10 in der schematischen Darstellung aus Fig. 1 zeigt, dass als auslösende Ereignisse das Unterbrechen einer Lichtschranke an den zuführenden Enden 2 der Transportbänder im ersten Tätigkeitsbereich A und am wegführenden Ende 9 des Transportbandes im dritten Tätigkeitsbereich C, und Vibrationen an den Behältern 6, 7 sowie an den Werkzeugen 8 im zweiten Tätigkeitsbereich B gewählt wurden. So wird aufgezeichnet, wann ein Werker 4 Bauteile von einem Transportband entfernt oder auf ein Transportband legt, wann ein Werker Bauteile aus einem Vorratsbehälter 6 entnimmt oder in einen Sammelbehälter 7 legt und wann ein Werker 4 ein Werkzeug 8 nutzt. Welcher Werker 4 welches Ereignis auslöst, wird allerdings nicht registriert, so dass die Datenerfassung dementsprechend anonym erfolgt.

Die Bewertung der Daten erfolgt unter anderem durch direkten Vergleich mit den Daten einer alternativen Version der Montageplatzgruppe. Sofern zum Beispiel immer die gleiche Anzahl von Abgabe-Bauteilen auf das wegführenden Ende 9 des Transportbandes im Tätigkeitsbereich C gelegt wird, kann aus der Anzahl der hier ausgelösten Triggerimpulse und den dazwischen liegenden Zeitintervallen eine Produktionsrate ermittelt werden. Unterscheiden sich zwei Versionen der Montageplatzgruppe hinsichtlich der verwendeten Werkzeugversionen, kann der direkte Vergleich der damit einhergehenden Produktionsraten aufzeigen, welche der beiden Werkzeugversionen geeigneter ist.

Eine weitere Möglichkeit besteht darin, die aufgezeichneten Daten mit entsprechenden Referenzvorgaben zu vergleichen. Bei besonders hohen Anschaffungs-und/oder Betriebskosten kann eine bestimmte Produktionsmindestrate ökonomisch vorteilhaft sein. Erweist sich die Tätigkeit als besonders ermüdend, kann die Produktionsrate mit zunehmender Arbeitszelt signifikant abnehmen. In diesem Fall könnte eine Reduzierung der Schichtdauer im Schichtbetrieb bei gleichzeltiger Anhebung der Anzahl der gefahrenen Schichten Abhilfe schaffen.

### Bezugszeichenliste

- 1: Montageplatzgruppe
- 2: Zuführendes Ende
- 3: Montageplatz
- 4: Werker
- 5: Tisch
- 6: Vorratsbehälter
- 7: Sammelbehälter
- 8: Werkzeug
- 9: Wegführendes Ende
- 10: Sensor
- 11: Auswerteeinheit

- A: erster Tätigkeitsbereich
- B: zweiter Tätigkeitsbereich
- C: dritter Tätigkeitsbereich

## Patentansprüche

1. Verfahren zur Bewertung eines Montageplatzes (3), wobei ein durch den Montageplatz (3) vorgegebener Montageprozess zunächst in einzelne Prozesssegmente unterteilt wird, die jeweils durch wenigstens ein charakteristisches Handlungsereignis gekennzeichnet sind, wobei während einer Durchführung oder einer Simulation des Montageprozesses zu den Prozesssegmenten automatisiert jeweils ein Zeitpunkt während des Auftretens des Handlungsereignisses sensorisch erfasst wird, wobei die zeitlichen Abstände zwischen den erfassten Zeitpunkten abfolgender Prozesssegmente ermittelt und als Datensatz abgespeichert werden, und wobei der Datensatz für die Bewertung der Effektivität des Montageplatzes (3) herangezogen wird.

2. Verfahren nach Anspruch 1,
wobei aus den ermittelten Zeitabständen auf die Dauer eines Prozesssegments geschlossen wird.

3. Verfahren nach Anspruch 1,
welches mehrfach wiederholt wird und wobei die mehrfach ermittelten Abstände zwischen den erfassten Zeitpunkten als Datensatz abgespeichert werden.

4. Verfahren nach Anspruch 3,
wobei aus den mehrfach ermittelten Zeitabständen auf eine durchschnittliche Dauer eines Prozesssegmentes geschlossen wird.

5. Verfahren nach einem der vorhergehenden Ansprüche,
wobei der ermittelte Datensatz mit einem vorgegebenen Referenzdatensatz verglichen wird.

6. Verfahren nach Anspruch 6,
wobei der ermittelte Datensatz und der Referenzdatensatz In Form einer Anzahl von Tupein hinterlegt werden, wobei jedes Tupel einem Prozesssegment eine Zeitdauer zuordnet, und wobei jeweils die Zeitdauern der Tupel derselben Prozesssegmente aus dem ermittelten Datensatz und aus dem Referenzdatensatz miteinander verglichen werden.

7. Verfahren nach Anspruch 6,
wobei die Tupel einem Prozesssegment zusätzlich einen Sensor (10) zuordnen, und wobei die zeitlichen Abstände zwischen den erfassten Zeitpunkten anhand dieser Zuordnung automatisiert den jeweiligen Prozesssegmenten im ermittelten Datensatz zugewiesen werden.

8. Verfahren nach einem der vorhergehenden Ansprüche,
wobei die Zeitpunkte mittels Sensoren, insbesondere mittels Auslöseelementen, erfasst werden.

9. Verfahren nach Anspruch 8,
wobei als Sensoren (10) oder Auslöseelemente mechanische Schalter, kapazitive Auslöseelemente, Näherungsschalter, optische Auslöseelemente, Lichtschranken- oder Lichtschnittsensoren, Bewegungssensoren oder Körperschallsensoren eingesetzt werden.

10. Verfahren nach einem der vorhergehenden Ansprüche,
wobei die sensorisch erfassten Informationen drahtlos übertragen werden.

11. Verfahren nach einem der vorhergehenden Ansprüche,
wobei die eingesetzten Sensoren (10) drahtlos anwenderspezifisch programmiert werden.

12. System zur Durchführung des Verfahrens gemäß einem der Ansprüche 1 bis 11, umfassend eine Anzahl von Sensoren (10), die zur automatisierten Erfassung eines Zeitpunktes eines Handlungsereignisses ausgebildet sind, sowie eine mit den Sensoren (10) signaltechnisch verbundene Auswerteeinheit (11) mit einem Speicher, welche ausgebildet ist zur Auswertung der erfassten Zeitabstände.

13. System nach Anspruch 12,
wobei die Auswerteeinheit (11) zur Hinterlegung einer vorgewählten Segmentierung des Montageprozesses sowie zu einer der Segmentierung zugeordneten graphischen Darstellung der ermittelten Zeitabstände ausgebildet ist.

14. System nach Anspruch 12 oder 13,
wobei die Auswerteeinheit (11) zu einem Vergleich der ermittelten Zeitabstände mit abgespeicherten Sollzeitabständen ausgebildet ist.

15. System nach einem der Ansprüche 12 bis 14,
wobei die Auswerteeinheit (11) ausgebildet ist, einen Referenzdatensatz mit Tupeln einzulesen, die jeweils einem Prozesssegment eine Zeltdauer und einen Sensor (10) zuordnen, und die zeitlichen Abstände zwischen den erfassten Zeitpunkten anhand dieser Zuordnung automatisiert den jeweiligen Prozesssegmenten im ermittelten Datensatz zuzuweisen.

16. System nach einem der Ansprüche 12 bis 15,
mit einem Sensorsystem, das eine Anzahl drahtlos kommunizierender Schnittstellenmodule umfasst, denen jeweils wenigstens ein Sensor (10) drahtgebunden angeschlossen ist, wobei die Schnittstellenmodule Mittel zu einer programmierbaren Anpassung der Datenerfassung und Datenüber-mittlung aufweisen.

17. Montageplatz (3) ausgestattet mit einem System zur Bewertung gemäß einem der Ansprüche 12 bis 16.
